# EUROPÄISCHE PATENTSCHRIFT

(11) **EP 1 268 128 B1**
(45) Veröffentlichungstag und Bekanntmachung des Hinweises auf die Patenterteilung: **04.11.2009**
(21) Anmeldenummer: 01925417.6
(22) Anmeldetag: 10.03.2001
(51) Int. Cl.: B24B 9/14, B24B 51/00

(54) **ANLAGE ZUM FORMBEARBEITEN DER RÄNDER VON BRILLENGLÄSERN**
ASSEMBLY FOR MACHINING THE EDGES OF SPECTACLE LENSES
SYSTEME D'USINAGE DES BORDS DE VERRES DE LUNETTES

(30) Priorität: 18.03.2000 DE 10013648
(43) Veröffentlichungstag der Anmeldung: 02.01.2003
(73) Patentinhaber: Buchmann Deutschland GmbH, 40231 Düsseldorf (DE)
(72) Erfinder: LUDERICH, Joerg, 40822 Ratingen (DE); KÖTTING, Fritz, 41541 Dormagen (DE); WERNER, Ralf, 40721 Hilden (DE)
(74) Vertreter: Christophersen & Partner
(86) Internationale Anmeldenummer: PCT/EP2001/002710
(87) Internationale Veröffentlichungsnummer: WO 2001/070460

(56) Entgegenhaltungen:
- DE-A- 4 127 094
- DE-A- 4 414 784
- DE-U- 29 823 464

## Beschreibung

Die Erfindung betrifft eine Anlage zum Formbearbeiten der Ränder von Brillengläsern gemäß dem Obenbegriff dem Anspruch 1 oder 2. Eine solche Anlage ist aus DE 4127 094 A bekannt.

In der DE 41 27 094 A beschrieben ist eine Anlage zum Schleifen der optischen Oberflächen und/oder des Umfangsrandes von Brillengläsern mit wenigstens einer Schleifscheibe, wenigstens einer drehbaren Halterung für ein Rohglas, wenigstens einer Einrichtung zum Steuern des Schleifens gemäß vorgebbaren optischen Werten und/oder einer vorgebbaren Umrißgestalt des Brillenglases, wenigstens einer Eingabevorrichtung für die optischen Werte des Brillenglases und/oder für die Dezentrationswerte, der vorgegebenen Umrißgestalt und/oder die Achsenlage und/oder die Des Nahteils mit Bezug auf die optische Achse eines zu schleifenden Rohglases und wenigstens eine mit der Eingabevorrichtung verbundene Steuereinrichtung. Vorgesehen ist ferner wenigstens ein mit der Steuereinrichtung verbundenes, CNC-gesteuertes Handhabungsgerät zum Aufnehmen und Positionieren des Rohglases des in die Eingabevorrichtung eingegebenen Werten und zum entsprechenden positionsgenauen Einsetzen des Rohglases in die Halterung. Mittels dieses Handhabungsgeräts läßt sich ein formzubearbeitendes Rohglas in eine Brillenglasrandbearbeitungsmaschine einsetzen. Es wird darin bearbeitet und anschließend wieder aus der Brillenglasrandbearbeitungsmaschine entnommen. Wenn für die Brillenglasrandbearbeitung durch die Brillenglasrandbearbeitungsmaschine ein auf dem Brillenglasrohling befestigter Block oder Sauger erforderlich ist, kann der Brillenglasrohling mittels des Handhabungsgeräts entsprechend den in einem Scheitelbrechwertmesser ermittelten Werten in lagegenauer Position in die Blockvorrichtung eingelegt und nach Aufbringen eines Saugers oder Halteblocks zu einer der Brillenglasrandschleifmaschinen gebracht werden. Da in der Regel ein rechtes und ein linkes Brillenglas hergestellt werden müssen, werden die entsprechenden Rohgläser nacheinander in die Brillenglasrandbearbeitungsmaschine eingesetzt und nach der Bearbeitung wieder entnommen. Zwar sind in der DE 41 27 094 A auch mehrere, nebeneinander angeordnete Brillenglasrandbearbeitungsmaschinen beschrieben, jedoch ohne Hinweis auf das Randbearbeiten der linken und rechten Brillengläser in unterschiedlichen Maschinen. In der DE 44 14 784 C2 derselben Anmelderin ist ebenfalls eine Anlage zum Schleifen des Umfangsrandes und/oder einer optischen Oberfläche von Brillengläsern mit wenigstens einer Schleifscheibe wenigstens einer drehbaren Halterung für ein Rohglas, wenigstens einer Einrichtung zum CNC-gesteuerten Schleifen des Rohglases gemäß einer vorgebbaren Umrißgestalt des Brillenglases, wenigstens einer mit der Steuereinrichtung verbundenen Eingabevorrichtung für die optischen Werte des fertigen Brillenglases, wie die Achsenlage eines zylindrischen oder prismatischen Schliffs und/oder die Lage eines Nahteils und/oder die Dezentrationswerte der vorgegebenen Umrißgestalt mit Bezug auf die optische Achse des Rohglases beschrieben, bei der wenigstens ein Handhabungsgerät zum Aufnehmen und Positionieren des Rohgases entsprechend den in die Eingabevorrichtung eingegebenen Werten und eine im Arbeitsbereich des Handhabungsgerät angeordnete Erkennungseinrichtung bestehend aus einer Alterung für das Rohglas, einer Beleuchtungseinrichtung für das an der Halterung gehaltene Rohglas und einer optoelektronischen Abtastvorrichtung mit einem elektronischen Bildverarbeitungs- und Auswertesystem zum Erkennen von gebräuchlichen Markierungen wie Punkte, Kreuze, Kerben am Rand des Rohglases oder die Lage eines vorhandenen Nahteils und eine Steuereinrichtung für das Handhabungsgerät zum positionsgenauen Einsetzen des Rohglases in die Halterung nach Maßgabe der von der Erkennungseinrichtung erfaßten Markierungen vorgesehen sind.

Ein durch Punkte, Kreuze, Kerben am Umfangsrand und/oder mindestens einen eindeutig abgegrenzten Nahteil markiertes Rohglas wird mittels des Handhabungsgeräts oder von Hand in die Halterung der Erkennungseinrichtung eingesetzt, woraufhin die als CCD-Kamera ausgebildete Erkennungseinrichtung ein Bild des Rohglases aufnimmt, mittels des elektronischen Bildverarbeitungs- und Auswertesystems dahingehend auswertet, daß Signale bezüglich der Achsenlage eines zylindrischen oder prismatischen Schliffs und/oder die Lage eines Nahteils ermittelt und in die Steuereinrichtung für das Handhabungsgerät eingegeben werden. Das Handhabungsgerät ergreift daraufhin das Rohglas lagegenau hinsichtlich der genannten optischen und/oder der Dezentrationswerte und setzt das Rohglas entsprechend diesen Werten in die Halterung einer Brillenglasrandschleifmaschine ein, die daraufhin automatisch den Formschliff des Rohglases CNC-gesteuert durchführt.

Das Handhabungsgerät weist einen bewegbaren Aufnehmer mit einem einzigen Sauger zum Einführen der Rohgläser in die Erkennungseinrichtung und mehrere bogenförmig angeordnete Sauger zum Überführen der Rohgläser von der Erkennungseinrichtung in die drehbare Halterung auf, wobei durch die bogenförmig angeordneten Sauger eine zentrische Aufnahme zwischen den Halbwellen der drehbaren Halterung gewährleistet ist.

Mittels dieser bekannten Anlage werden nacheinander ein linkes und ein rechtes Brillenglas von dem Handhabungsgerät aufgenommen und in eine im Arbeitsbereich des Handhabungsgeräts angeordnete Brillengtasrandbearbeitungsmaschine eingesetzt sowie daraus entnommen.

In der DE 298 23 464 5 U1 derselben Anmelderin ist eine Anlage zum Formbearbeiten der Ränder von Brillengläser mit einer Bearbeitungsmaschine zum Formbearbeiten eines linken Brillenglases, einer Bearbeitungsmaschine zum Formbearbeiten eines rechten Brillenglases, einer zwischen den beiden Bearbeitungsmaschinen angeordneten Fördereinrichtung für Roh-und Fertiggläser, wenigstens einem zwischen der Fördereinrichtung und den beiden Bearbeifungsmaschinen beweglich angeordneten Handhabungsgerät zum Entnehmen von Rohglasern von der Fördereinrichtung, zum Einsetzen je eines Rohgases in je eine Bearbeitungsmaschine, zum Entnehmen je eines fertigbearbeiteten Brillenglases aus je einer Bearbeitungsmaschine und zum Zurückbringen zu der Fördereinrichtung beschrieben. Durch die zwischen den beiden Bearbeitungsmaschinen angeordnete Fördereinrichtung werden die beiden zu bearbeitenden Rohgläser in den Bereich des Handhabungsgeräts transportiert, von dem Handhabungsgerät aufgenommen, in die beiden Bearbeitungsmaschinen eingesetzt und gleichzeitig bearbeitet, so daß weder ein Einsetzen der Rohgläser in die Brillenglasrandbearbeitungsmaschinen von Hand erforderlich ist, noch Zeit verloren geht, um ein linkes und ein rechtes Brillenglas zu bearbeiten.

Wenn die Rohgläser in einem bekannten Zentriergerät lagegenau, jeweils entsprechend der Dezentration für ein linkes und ein rechtes Brillenglas, der Wickellage eines prismatischen oder zylindrischen Schiffs und/oder der Lage eines Nahteils mit einem Block oder Sauger versehen sind und in den Transportkästen lagerichtig mit Bezug auf die Aufnahmestellung der Brillenglashaltewellen in den Brillenglasrandbearbeitungsmaschinen angeordnet sind, brauchen die Handhabungsgeräte die Rohgläser nur aufzunehmen und entsprechend der aufgenommenen Position in die Brillenglashaltewellen einzusetzen, so daß die Handhabungsgeräte nur einfache, sich immer wiederholende Bewegungen zu vollführen haben.

Statt Rohgläser mit angesetzten Blöcken oder Saugern in die Transportkästen einzusetzen, können Rohgläser ohne darauf angebrachte Blöcke oder Sauger in die Transportkästen eingesetzt werden, wenn die Handhabungsgeräte entsprechende Sauger aufweisen, die die Rohgläser festhalten und zur Bearbeitung in die Brillenglashaltewelle einsetzen. Weisen die Handhabungsgeräte Sensoren zum Erkennen von maschinenlesbaren Markierungen auf den Rohgläsern auf, können die Rohgläser auch in beliebiger Lage in den Transportkasten angeordnet sein, wenn die Handhabungsgeräte in diesem Fall mit einer Steuereinrichtung versehen sind, die dafur sorgt, daß die Rohglaser entsprechend den maschinenlesbaren Markierungen lagegenau in die Brillenllashaltewelle eingesetzt werden oder Signale an die Brillenglasrandschleifmaschinen geben, um die Randbearbeitung entsprechend der Lage der Rohglaser in den Brillenglashaltewellen zu steuern.

In allen Fällen ist indessen das lagegenaue Aufsetzen eines Blocks oder Saugers oder das Anbringen von maschinenlesbaren Markierungen erforderlich, und die Rohgläser müssen entsprechend ausgerichtet vom Handhabungsgerät aufgenommen oder das Handhabungsgerät ausgerichtet in die Brillenglasrandbearbeitungsmaschine eingesetzt werden wodurch ein zusätzlicher Aufwand und ggf. Zeitverlust bei der Randbearbeitung der Rohgläser entsteht.

Der Erfindung liegt das Problem zugrunde, das Herstellen von Brillengläsern für Brillenfassungen, insbesondere von linken und rechten Brillengläsern, zu beschleunigen, die damit verbundenen Handhabungen zu vereinfachen und den apparativen und Steuerungsaufwand zu vermindern.

Ausgehend von dieser Problemstellung wird eine Anlage gemäß dem Anspruch 1 oder 2 zum Formbearbeiten der Ränder von Brillengläsern vorgeschlagen.

Wenn die wenigstens eine Vorrichtung in Datenverbindung mit der wenigstens einen Bearbeitungsmaschine seht und die durch die Vorrichtung aufgenommenen Daten des Rohglases in das lage- und winkelgenaue, CNC-gesteuerte Randbearbeiten des Rohglases durch die Bearbeitungsmaschine einfließen, oder die wenigstens eine Vorrichtung mit jeweils einer Einrichtung lage- und winkelgerechten Aufsetzen eines Blocks oder Saugers auf das Rohglas (6) in Abhängigkeit von den aufgenommenen Daten des Rohglases (6) verschen ist, braucht das Handhabungsgerät das Rohglas nur von der Fördereinrichtung aufzunehmen in die Vorrichtung zum Bestimmen der optischen Werte, des optischen Mittetpunktes, der Achsenlage eines zylindrischen oder prismatischen Schliffs, der Lage eines Nahteils und/oder der Lage des Progressionskanals eines als Gleitsichtglas ausgebildeten Brillenglases, einzusetzen, daraus wieder zu entnehmen und in die wenigstens eine Bearbeitungsmaschine zum Formbearbeiten des Brillenglases einzusetzen, wobei die Bearbeitungsmaschine entweder die durch die Vorrichtung aufgenommenen Daten direkt rechnerisch berücksichtigt oder das Rohglas mit Hilfe des lage- und winkelgenauen Blocks oder Saugers entsprechend lage- und winkelgerecht aufnimmt und das Rohglas danach bearbeitet.

Für das Handhabungsgerät sind daher keine aufwendigen Steuerungen erforderlich, vielmehr handelt es um einen einfachen "Pick and Place Roboter". Die Vorrichtung zum Bestimmen der optischen Werte usw erzeugt nämlich eine entsprechende Datenmenge, so daß es möglich ist, diese Werte über eine Datenverbindung in die Bearbeitungsmaschine weiterleiten, wodurch die durch die Vorrichtung zum Bestimmen der optischen Werte usw. aufgenommenen Daten der Rohgläser beim lage- und winkelgenauen, CNC-gesteuerten Randbearbeiten der Rohgläser durch die Bearbeitungsmaschine Berücksichtung finden, ohne daß es erforderlich ist, die Rohgläser lage- und winkelgenau in die Brillenglashaltewelle der Brillenglasbcarbeitungsmaschine einzusetzen.

Wenn die Vorrichtung zum Bestimmen der optischen Werte usw. jeweils mit einer Einrichtung zum lage- und winketgerechten Aufsetzen eines Blocks oder Saugers auf das Rohglas in Abhängigkeit von den aufgenommenen Daten der Rohgläser versehen ist, ist eine Datenverbindung zu der Bearbeitungsmaschine nicht erforderlich, da in diesem Fall der aufgesetzte Block oder Sauger die Lage und den Winkel des Rohglases auf die Brillenglashaltewelle bestimmt.

Dies bedeutet, daß nur die Vorrichtung zum Bestimmen der optischen Werte, des optischen Mittelpunktes der Achsenlage eines zylindrischen oder prismatischen Schliffs, der Lage eines Nahteils und/oder der Lage des Progressionskanals eines als Gteitsichtgtas ausgebildeten Brillenglases und die Bearbeitungsmaschine "intelligent" sein müssen, das Handhabungsgerät jedoch nicht. Hierdurch wird der Steuerungsaufwand ganz erheblich vermindert und der Ablauf beschleunigt.

Die Anlage zum Formbearbeiten der Ränder von Brillengläsern kann eine Bearbeitungsmaschine zum Formbearbeiten eines linken Brillenglases, eine Bearbeitungsmaschine zum Formbearbeiten eines rechten Brillenglases, eine zwischen den beiden Bearbeitungsmaschinen angeordnete Fördereinrichtung für Roh- und Fertiggläser, wenigstens eine Vorrichtung zum Bestimmen der optischen Werte, des optischen Mittelpunktes, der Achsenlage eines zylindrischen oder prismatischen Schliffs, der Lage eines Nahteils und/oder der Lage des Progressionskanals eines als Gleitsichtglas ausgebildeten Brillenglases sowie wenigstens ein zwischen der Fördereinrichtung und den beiden Bearbeitungsmaschinen beweglich angeordnetes Handhabungsgerät zum Entnehmen von Rohglasern von der Fördereinrichtung, zum Einsetzen eines Rohglases in die Vorrichtung zum Entnehmen aus der Vorrichtung, zum Einsetzen in je eine Bearbeitungsmaschine, zum Entnehmen je eines fertig bearbeiteten Brillenglases aus je einer Bearbeitungsmaschine und zum Zurückbringen zu der Fördervorrichtung aufweisen.

Durch die zwischen den beiden Bearbeitungsmaschinen angeordnete Fördereinrichtung werden die beiden zu bearbeitenden Rohgläser in den Bereich des Handhabungsgeräts transportiert, von dem Handhabungsgerät aufgenommen, in die Vorrichtung zum Bestimmen der optischen Werte, des optischen Mittelpunktes, der Achsenlage eines zylindrischen oder prismatischen Schliffs, der Lage eines Nahteils und/oder der Lage des Progressionskanals eines als Gleitsichtglas ausgebildeten Brillenglases gebracht und danach in die beiden Bearbeitungsmaschinen eingesetzt und gleichzeitig bearbeitet, so daß weder ein Einsetzen der Rohgläser in die Brillenglasrandbearbeitungsmaschinen von Hand erforderlich ist, noch Zeit verloren geht, um ein linkes und ein rechtes Brillenglas zu bearbeiten.

Vorzugsweise kann ein Handhabungsgerät an einer portalartig die Bearbeitungsmaschinen übergreifenden Führungen verfahrbar angeordnet sein, an der sich das Handhabungsgerät in den Bereich der Bearbeitungsmaschinen und der Fördereinrichtung verfahren läßt, um Rohgläser aufzunehmen, in die Bearbeitungsmaschinen einzusetzen, sowie um fertigbearbeitete Gläser aus den Bearbeitungsmaschinen zu entnehmen und wieder auf die Fördereinrichtung zurückzusetzen.

Vorzugsweise kann je ein Handhabungsgerät für je eine Bearbeitungsmaschine zwischen der Fördereinrichtung und der jeweiligen Bearbeitungsmaschine vorgesehen sein, die gleichzeitig Rohgläser aufnehmen, in die Vorrichtung zum Bestimmen der optischen Werte, des optischen Mittelpunktes, der Achsenlage eines zylindrischen oder prismatischen Schliffs, der Lage eines Nahteils und/oder der Lage des Progressionskanals eines als Gleitsichtglas ausgebildeten Brillenglases einlegen, die Bearbeitungsmaschinen beschicken und Fertiggläser aus den Bearbeitungsmaschinen entnehmen und auf die Fördereinrichtung zurücksetzen können. Auf diese Weise entsteht auch beim Einsetzen der Rohgläser und Entnehmen der Fertiggläser kein Zeitverlust.

Zum Antransport der Rohgläser und zum Abtransport der Fertiggläser kann je ein Förderband parallel zu den beiden Bearbeitungsmaschinen angeordnet sein, während die Fördereinrichtung zwischen den Bearbeitungsmaschinen ebenfalls aus einem Förderband bestehen kann, das senkrecht zu den beiden anderen Förderbändern angeordnet ist. Dabei können die Rohglaser paarweise aus einem mittels der Förderbänder transportierten Transportkasten entnommen und in diesen mittels der Handhabungsgeräte zurückgelegt werden

Die Bearbeitungsmaschinen können entweder so angeordnet sein, daß die Achsen der Brillenglashaltewellen parallel zueinander und zur Fördereinrichtung verlaufen, wodurch die Anordnung des Handhabungsgeräts vereinfacht wird, oder aber die Brillenglashaltewellen der beiden Bearbeitungsmaschinen können koaxial zueinander und senkrecht zur Förderrichtung der Fördereinrichtung verlaufen, wodurch die Zugänglichkeit der Bearbeitungsmaschinen verbessert wird.

Vorzugsweise kann jeder Bearbeitungsmaschine je eine Vorrichtung zum Bestimmen der optischen Werte, des optischen Mittelpunkts, der Achsenlage eines zylindrischen oder prismatischen Schliffs, der Lage eines Nahteils und/oder der Lage des Progressionskanals eines als Gleitsichtglas ausgebildeten Brillenglases zugeordnet sein, so daß das Bestimmen der optischen Werte usw. zeitgleich für ein linkes und ein rechtes Brillenglas erfolgen kann und somit beim Ablauf kein Zeitverlust eintritt. Die Vorrichtungen zum Bestimmen der optischen Werte können entweder jeweils benachbart zur Fördereinrichtung oder so angeordnet sein, daß die Bearbeitungsmaschinen jeweils benachbart zur Fördereinrichtung liegen.

In beiden Fällen können die Bearbeitungsmaschinen und die Vorrichtungen zum Bestimmen der optischen Werte usw. vorzugsweise nebeneinander und fluchtend angeordnet sein.

Wenn die Vorrichtungen zum Bestimmen der optischen Werte usw. in Datenverbindung mit dem Handhabungsgerät stehen, läßt sich das Handhabungsgerät so ansteuern, daß die durch die Vorrichtungen zum Bestimmen der optischen Werte usw. aufgenommenen Daten der Rohgläser in das lage- und winkelgenaue, CNC-gesteuerte Einsetzen der Rohgläser in die Bearbeitungsmaschinen einfließen.

Die Erfindung wird nachstehend anhand zweier in der Zeichnung dargestellter Ausführungsbeispiele des näheren erläutert. In der Zeichnung zeigen:
- Fig. 1: eine schematische Vorderansicht der Anlage,
- Fig. 2: eine schematische Draufsicht der Anlage gemäß Fig. 1,
- Fig. 3: eine schematische Vorderansicht einer zweiten Ausführungsform der Anlage und
- Fig. 4: eine schematische Draufsicht der Anlage gemäß Fig. 3.

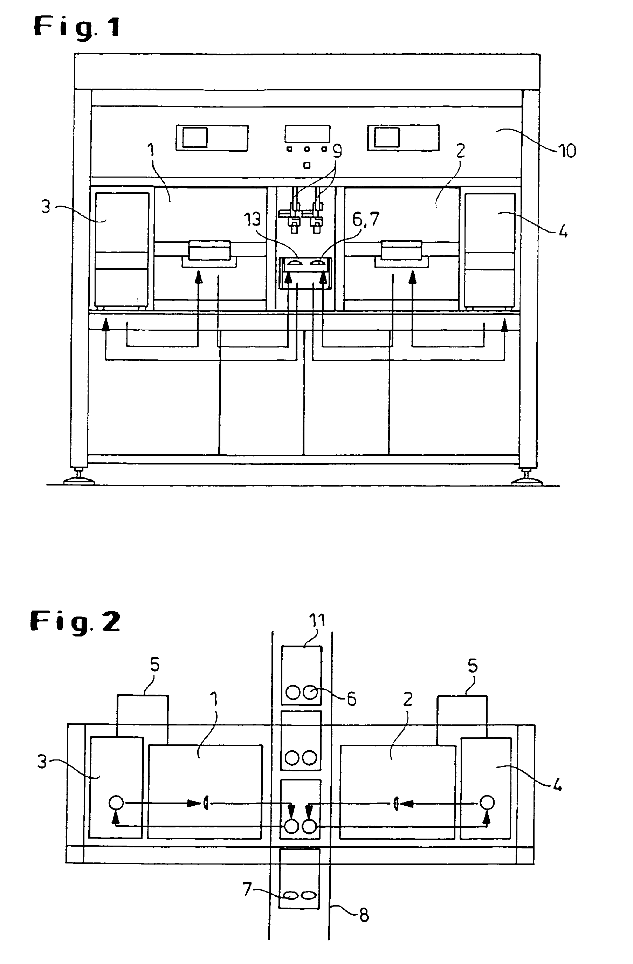

Im in Fig. 1 dargestellten Ausführungsbeispiel sind eine Brillenglasrandbearbeiitungsmaschine 1 für ein linkes Brillenglas und eine Brillenglasrandbearbeitungsmaschine 2 für ein rechtes Brillenglas einander gegenüberliegend angeordnet, und ihre Brillenglashaltewellen verlaufen koaxial zueinander.

Bei den Brillengtasrandbearbeitungsmaschinen 1 2 sind in im einzelnen nicht dargestellter Weise Brillenglashaltewellen jeweils in Bearbeitungskammern der Brillenglasrandbearbeitungsmaschinen 1 bzw. 2 angeordnet, die mittels jeweils eines Klappdeckels verschließbar sind.

Für die Bearbeitung von Brillengläsern aus Silikatglas werden nicht dargestellte Diamantschleifscheiben eingesetzt, wobei dem Schleifspalt zwischen einem zu bearbeitenden und zwischen den Halbwellen eingeklemmten Rohglas 6 und einer nicht dargestellten Schleifscheibe Kühlflüssigkeit zugeführt wird.

Für die Bearbeitung von Kunststoffgläsern werden hochtourig laufende Fräser oder ebenfalls Schleifscheiben eingesetzt, wobei je nach Art des Kunststoffs die Bearbeitung ebenfalls mit Zufuhr eines Kühlmittels oder trocken erfolgt

Zwischen den Brillenglasrandbearbeitungsmaschinen 1, 2 ist eine Fördereinrichtung in Form eines Förderbandes 8 angeordnet, dessen Transportrichtung im dargestellten Ausführungsbeispiel senkrecht zu den Achsen der Brillenglashaltewellen 3, 4 verläuft und zum Antransport von in Transportkästen angeordneten Rohgläsern 6 sowie zum Abtransport von Fertiggläsern 7 dient.

Mittels des Förderbandes 8 wird jeweils ein Transportkasten 13 herantransportiert und kommt im Bereich eines an einer portalartigen Führung 10 verfährbaren Handhabungsgerätpaares 9 zum Stillstand. Hier wird ein Rohglaspaar 6 von den Handhabungsgeräten 9 aufgenommen und in Vorrichtungen 3, 4 zum Bestimmen der optischen Werte, des optischen Mittelpunktes, der Achsenlage eines zylindrischen oder prismatischen Schliffs, der Lage eines Nahteils und/oder der Lage des Progressionskanals eines als Gleitsichtglas ausgebildeten Rohglases 6 eingesetzt. Die durch die Vorrichtungen 3, 4 aufgenommenen Werte werden als eine Datenmenge über eine Datenverbindung 5 zu den Brillenglasrandbearbeitungsmaschinen 1, 2 übermittelt. Diese Brillenalasrandbearbeitungsmaschinen 1, 2 sind CNC-gesteuert und in der Lage, die von den Vorrichtungen 3, 4 übermittelten Daten bei der Randbearbeitung der Rohgläser 6 zu berücksichtigen

Nach Aufnahme der optischen Werte usw. in den Vorrichtungen 3, 4 greifen die Handhabungsgeräte 9 erneut die Rohgläser und setzen sie in die Brillenglasrandbearbeitungsmaschinen 1, 2 ein, wo sie zu einem linken bzw rechten Brillenglas 7 formbearbeitet werden.

Nach Beendigung der Bearbeitung werden die Fertiggläser 7 mittels des Handhabungsgerätepaares 9 aus den Briliengtashahewellen der Brillengtasrandbearbeitungsmaschinen 1, 2 herausgenommen und wieder in den Transportkasten 13 zurückgesetzt. Danach wird das Transportband 8 wieder in Bewegung gesetzt und transportiert den Transportkasten 13 mit den Fertiggläsern 7 in einen Weiterverarbeitungsbereich, wo die Fertiggläser in die dazugehörige Brillenfassung eingesetzt werden.

Im dargestellten Ausführungsbeispiel weisen die Handhabungsgeräte 9 im einzelnen nicht dargestellte Sauger auf, mit Hilfe derer sich die Rohgläser 6 ergreifen, zwischen die Brillenglashaltewellen setzen und dort festklemmen lassen.

In diesem Fall ist ein lagegenaues Ausrichten und winkelgenaues Einsetzen der Rohgläser 6 in die Brillenglashaltewellen nicht erforderlich, und die Handhabungsgeräte 9 brauchen nur einfache, sich immer wiederholende Bewegungen zu vollführen, da die in den Vorrichtungen 3, 4 zum Bestimmen der optischen Werte usw. aufgenommenen und an die Brillenglasbearbeitungsmaschinen 1, 2 übermittelten Daten Informationen über die Lage der Rohgläser 6 enthalten, die bei der Brillenglasbearbeitung rechnerisch berücksichtigt werden.

Wenn die Brillenglasbearbeitungsmaschinen 1, 2 nicht CNC-gesteuert sind oder eine Datenverbindung zu den Vorrichtungen 3, 4 zum Bestimmen der optischen Werte usw. nicht zulassen, ist es auch möglich, die Vorrichtungen 3, 4 zum Bestimmen der optischen Werte jeweils mit einer Einrichtung zum lage- und winkelgerechten Aufsetzen eines Blocks oder Saugers auf das Rohglas in Abhängigkeit von den aufgenommenen Daten der Rohgläser zu versehen. In diesem Fall nehmen die Handhabungsgeräte 9 die Rohgläser 6 an den daran befestigten Blöcken oder Saugern in den Vorrichtungen 3, 4 zum Bestimmen der optischen Werte usw. auf und setzen sie achsgenau in die Brillenglashaltewellen. Da die üblichen Blöcke oder Sauger Aufnahmen aufweisen, die zu denen der Brillenglashaltewellen komplementär sind, genügt es, wenn sich die Brillenglashaltewellen beim Zusammenfahren zum Einspannen der mit Blöcken oder Saugern versehenen Rohgläser 6 geringfügig drehen, um in die Aufnahmen einzurasten, wodurch auch die Winkellage der Rohgläser 6 bezüglich der Brillenglashaltewellen festgelegt ist.

Gemäß einer weiteren Ausführungsform kann zwischen den Vorrichtungen 3, 4 zum Bestimmen der optischen Werte usw. und den Handhabungsgeraten 9 eine Datenverbindung vorgesehen sein. Die durch die Vorrichtungen 3, 4 zum Bestimmen der optischen Werte usw. aufgenommenen Daten der Rohgläser 6 werden dann in den Handhabungsgeräten 9 rechnerisch berücksichtigt, um die Rohgläser 6 lage- und winkelgenau in die Bearbeitungsmaschinen 1, 2 einzusetzen.

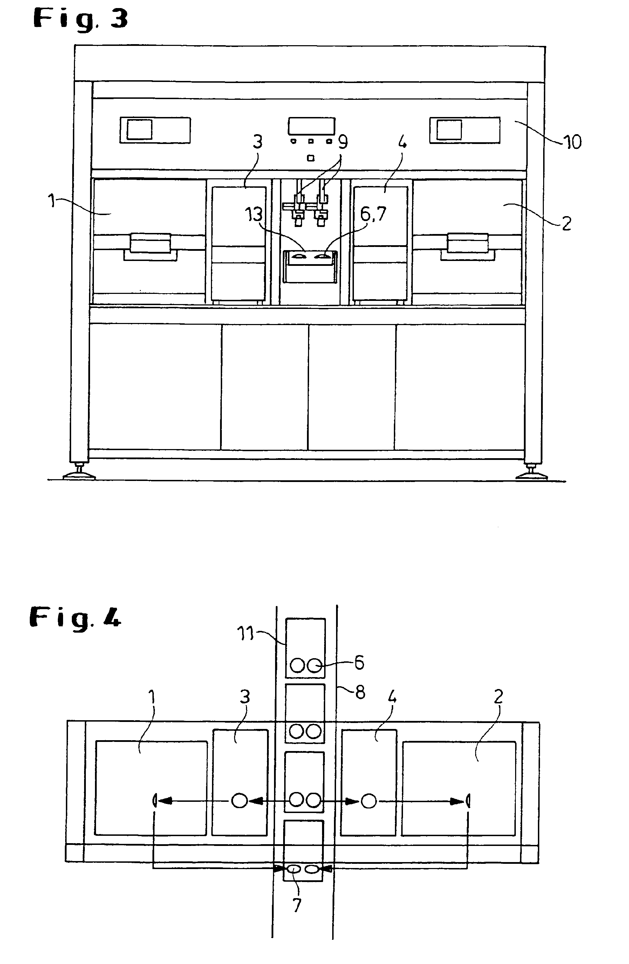

Bei der in den Fig. 3 und 4 dargestellten Ausführungsform sind die Vorrichtungen 3, 4 zum Bestimmen der optischen Werte usw. benachbart zur Fördereinrichtung 8 angeordnet, während bei der Ausführungsform gemäß Fig. 1 und 2 die Bearbeitungsmaschinen 1, 2 benachbart zur Fördereinrichtung 8 angeordnet sind. Der prinzipielle Ablauf verändert sich dadurch nicht.

Bei beiden Ausführungsbeispielen verlaufen die Achsen der Brillenglashaltewellen der beiden Bearbeitungsmaschinen 1, 2 koaxial zueinander, und die Bearbeitungsmaschinen 1, 2 sowie die Vorrichtungen 3, 4 zum Bestimmen der optischen Werte usw. sind im wesentlichen fluchtend und senkrecht zur Bewegungsrichtung der Fördereinrichtung 8 angeordnet. Es ist jedoch auch möglich, die Bearbeitungsmaschine 1 und die Vorrichtung 3 zum Bestimmen der optischen Werte usw. sowie die Bearbeitungsmaschine 2 und die Vorrichtung 4 zum Bestimmen der optischen Werte usw. um 90° gedreht mit Bezug auf die Fördereinrichtung 8 anzuordnen, so daß die Achsen der Brillenglashaltewellen in den Bearbeitungsmaschinen 1, 2 parallel zur Bewegungsrichtung der Fördereinrichtung 8 liegen.

Das dargestellte Ausführungsbeispiel zeigt eine Doppelmaschinenanordnung zum gleichzeitigen Bearbeiten von linken und rechten Brillengläsern. Die Erfindung ist hierauf jedoch nicht beschränkt, sondern umfaßt auch Ausführungsformen mit nur einer Bearbeitungsmaschine zum Formbearbeiten von Brillengläsern, einem Handhabungsgerät und einer Vorrichtung zum Bestimmen der optischen Werte, des optischen Mittelpunktes, der Achsenlage eines zylindrischen oder prismatischen Schliffs, der Lage eines Nahteils und/oder der Lage des Progressionskanals eines als Gleitsichtglas ausgebildeten Brillenglases, wobei diese Vorrichtung entweder mit der Bearbeitungsmaschine über eine Datenleitung in Verbindung steht oder eine Einrichtung zum lage- und winkelgenauen Aufsetzen eines Blocks oder Saugers auf das Rohgas in Abhängigkeit von den aufgenommenen Daten des Rohgases versehen ist, so daß das Handhabungsgerät ein einfacher "Pick and Place Roboter" sein kann.

## Patentansprüche

1. Anlage zum Formbearbeiten der Ränder von Brillengläsern mit
- wenigstens einer CNC-gesteuerten Bearbeitungsmaschine (1) zum Formbearbeiten eines Brillenglases,
- wenigstens einer Vorrichtung (3, 4) zum Bestimmen der optischen Werte, des optischen Mittelpunktes, der Achsenlage eines zylindrischen oder prismatischen Schliffs, der Lage eines Nahteils und/oder der Lage des Progressionskanals eines als Gleitsichtglas ausgebildeten Brillenglases (6),
- wenigstens einem Handhabungsgerät (9) zum Entnehmen von Rohgläsern (6) von einer Fördereinrichtung (8), zum Einsetzen eines Rohglases (6) in die Vorrichtung (3, 4), zum Entnehmen aus der Vorrichtung (3, 4), zum Einsetzen in je eine Bearbeitungsmaschine (1, 2) und zum Zurückbringen zu der Fördereinrichtung (8), bei der die wenigstens eine Vorrichtung (3, 4) in Datenverbindung (5) mit wenigstens einer Bearbeitungsmaschine (1, 2) steht,
**dadurch gekennzeichnet,**
**dass** das wenigstens eine Handhabungsgerät (9) an einer portalartig die Bearbeitungsmaschine (12) übergreifenden Führung (10) verfahrbar angeordnet ist, als einfacher "Pick and Place" Roboter ausgebildet ist und die durch die Vorrichtung (3, 4) aufgenommenen Daten des Rohglases (6) in das lage- und winkelgenaue, CNC-gesteuerte Randbearbeiten des Rohglases (6) durch die Bearbeitungsmaschine (1, 2) einfließen.

2. Anlage zum Formbearbeiten der Ränder von Brillengläsern mit
- wenigstens einer CNC-gesteuerten Bearbeitungsmaschine (1) zum Formbearbeiten eines Brillenglases,
- wenigstens einer Vorrichtung (3, 4) zum Bestimmen der optischen Werte, des optischen Mittelpunktes, der Achsenlage eines zylindrischen oder prismatischen Schliffs, der Lage eines Nahteils und/oder der Lage des Progressionskanals eines als Gleitsichtglas ausgebildeten Brillenglases (6),
- wenigstens einem Handhabungsgerät (9) zum Entnehmen von Rohgläsern (6) von einer Fördereinrichtung (8), zum Einsetzen eines Rohglases (6) in die Vorrichtung (3, 4), zum Entnehmen aus der Vorrichtung (3, 4), zum Einsetzen in je eine Bearbeitungsmaschine (1, 2) und zum Zurückbringen zu der Fördereinrichtung (8),
**dadurch gekennzeichnet,**
**dass** das wenigstens eine Handhabungsgerät (9) an einer portalartig die Bearbeitungsmaschine (1,2) übergreifenden Führung (10) verfahrbar angeordnet ist, als einfacher "Pick and Place" Roboter ausgebildet ist, und die wenigstens eine Vorrichtung (3, 4) mit jeweils einer Einrichtung zum lage- und winkelgerechten Aufsetzen eines Blocks oder Saugers auf das Rohglas (6) in Abhängigkeit von den aufgenommenen Daten des Rohglases (6) versehen ist, wobei der Block oder Sauger Aufnahmen aufweist, die zu entsprechenden Aufnahmen an einer Brillenglashaltewelle der Bearbeitungsmaschine (1, 2) komplementär sind und die Lage und den Winkel des Rohglases (6) beim Einsetzen in die Bearbeitungsmaschine (1, 2) festlegen.

3. Anlage zum Formbearbeiten der Ränder von Brillengläsern, nach Anspruch 1 oder 2, mit
- einer Bearbeitungsmaschine (1) zum Formbearbeiten eines linken Brillenglases.
- einer Bearbeitungsmaschine (2) zum Formbearbeiten eines rechten Brillenglases,
- einer zwischen den beiden Bearbeitungsmaschinen (1, 2) angeordneten Fördereinrichtung (8) für Roh- und Fertiggläser (6, 7),
- wenigstens einer Vorrichtung (3, 4) zum Bestimmen der optischen Werte, des optischen Mittelpunktes, der Achsenlage eines zylindrischen oder prismatischen Schliffs, der Lage eines Nahteils und/oder der Lage des Progressionskanals eines als Gleitsichtglas ausgebildeten Brillenglases (6),
- wenigstens einem zwischen der Fördereinrichtung (8) und den beiden Bearbeitungsmaschinen (1, 2) beweglich angeordneten Handhabungsgerät (9) zum Entnehmen von Rohgläsern (6) von der Fördereinrichtung (8), zum Einsetzen eines Rohglases (6) in die Vorrichtung (3, 4), zum Entnehmen aus der Vorrichtung (3, 4) zum Einsetzen in je eine Bearbeitungsmaschine (1, 2), zum Entnehmen je eines fertig bearbeiteten Brillenglases (7) aus je einer Bearbeitungsmaschine (1, 2) und zum Zurückbringen zu der Förderinrichtung (8).

4. Anlage nach Anspruch 3, bei der die Vorrichtungen (3, 4) in Datenverbindung mit dem Handhabungsgerät (9) stehen und die durch die Vorrichtungen (3, 4) aufgenommenen Daten der Rohgläser (6) in das lage- und winkelgenaue, CNC-gesteuerte Einsetzen der Rohgläser (6) in die Bearbeitungsmaschinen (1, 2) einfließen.

5. Anlage nach Anspruch 4, bei der das wenigstens eine Handhabungsgerät (9) an einer portalartig die Bearbeitungsmaschine (1, 2) übergreifenden Führung (10) verfahrbar angeordnet ist.

6. Anlage nach Anspruch 4 oder 5, bei der je ein Handhabungsgerät (9) für je eine Bearbeitungsmaschine (1, 2) zwischen der Fördereinrichtung (8) und der jeweiligen Bearbeitungsmaschine (1, 2) beweglich vorgesehen ist.

7. Anlage nach einem der Ansprüche 3 bis 6, bei der je ein Förderband zum Abtransport von Rohgläsern (6) und zum Abtransport von Fertigläserpaaren (7) parallel zu den beiden Bearbeitungsmaschinen (1, 2) angeordnet ist und die Fördereinrichtung (8) zwischen den Bearbeitungsmaschinen (1, 2) ebenfalls aus einem Förderband besteht, das senkrecht zu den beiden anderen Förderbändern verläuft, wobei die Rohgläser (6) paarweise aus einem mittels der Förderbänder transportierenden Transportkasten (13) entnommen und in diesen zurückgelegt werden.

8. Anlage nach einem der Ansprüche 3 bis 7, bei der die Bearbeitungsmaschinen (1, 2) eine sich langsam drehende Brillenglashaltewelle sowie parallelachsig dazu eine Schleifscheibenanordnung aufweisen und die Achsen der Brillenglashaltewellen parallel zueinander und zur Förderrichtung; der Fördereinrichtung (8) verlaufen.

9. Anlage nach Anspruch 3 oder 7, bei der die Bearbeitungsmaschinen (1, 2) eine sich langsam drehende Brillenglashaltewelle sowie parallachsig dazu eine Schleifscheibenanordnung aufweisen und die Achsen der Brillenglashaltewellen koaxial zueinander und senkrecht zur Förderrichtung der Fördereinrichtung (8) verlaufen.

10. Anlage nach einem der Ansprüche 4 bis 9, bei der jeder Bearbeitungsmaschine (1, 2) je eine Vorrichtung (3, 4) zugeordnet ist.

11. Anlage nach Anspruch 10, bei der die Vorrichtungen (3, 4) jeweils benachbart zur Fördereinrichtung (8) angeordnet sind.

12. Anlage nach Anspruch 10, bei der die Bearbeitungsmaschinen (1, 2) jeweils benachbart zur Fördereinrichtung (8) angeordnet sind.

13. Anlage nach Anspruch 11 oder 12, bei der die Bearbeitungsmaschinen (1, 2) und die Vorrichtungen (3, 4) nebeneinander und fluchtend angeordnet sind.

## Claims

1. Installation for shape machining the edges of spectacle lenses, having
- at least one CNC-controlled processing machine (1) for shape machining a spectacle lens,
- at least one apparatus (3, 4) for determining the optical values, the optical centre, the axial position of a cylindrical or prismatic cut, the position of a near portion and/or the position of the progression channel of a spectacle lens (6) designed as a progressive lens,
- at least one handling appliance (9) for the removal of lens blanks (6) from a conveyor device (8), for the insertion of a lens blank (6) into the apparatus (3, 4), for removal from the apparatus (3, 4), for insertion into one processing machine (1, 2) each, and for bringing it back to the conveyor device (8), in the case of which the at least one apparatus (3, 4) is in data connection (5) with at least one processing machine (1, 2),
**characterized**
**in that** the at least one handling appliance (9) is arranged to be movable on a guide (10) engaging over the processing machine (1, 2) in the manner of a portal and is designed as a simple pick and place robot, and the data of the lens blank (6) recorded by the apparatus (3, 4) are used in the positionally and angularly accurate, CNC-controlled edge machining of the lens blank (6) by the processing machine (1, 2).

2. Installation for shape machining the edges of spectacle lenses, having
- at least one CNC-controlled processing machine (1) for shape machining a spectacle lens,
- at least one apparatus (3, 4) for determining the optical values, the optical centre, the axial position of a cylindrical or prismatic cut, the position of a near portion and/or the position of the progression channel of a spectacle lens (6) designed as a progressive lens,
- at least one handling appliance (9) for the removal of lens blanks (6) from a conveyor device (8), for the insertion of a lens blank (6) into the apparatus (3, 4), for removal from the apparatus (3, 4), for insertion into one processing machine (1, 2) each, and for bringing it back to the conveyor device (8),
**characterized**
**in that** the at least one handling appliance (9) is arranged to be movable on a guide (10) engaging over the processing machine (1, 2) in the manner of a portal and is designed as a simple pick and place robot, and the at least one apparatus (3, 4) is provided with, in each case, a device for placing a block or suction cup on the lens blank (6) in the correct position and at the correct angle as a function of the recorded data of the lens blank (6), a block or suction cup having holders which are complementary to corresponding holders on a spectacle lens holding shaft of the processing machine (1, 2) and fix the position and the angle of the lens blank (6) upon insertion into the processing machine (1, 2).

3. Installation for shape machining the edges of spectacle lenses according to Claim 1 or 2, having
- a processing machine (1) for shape machining a left-hand spectacle lens,
- a processing machine (2) for shape machining a right-hand spectacle lens,
- a conveyor device (8), arranged between the two processing machines (1, 2), for lens blanks and finished lenses (6, 7),
- at least one apparatus (3, 4) for determining the optical values, the optical centre, the axial position of a cylindrical or prismatic cut, the position of a near portion and/or the position of the progression channel of a spectacle lens (6) designed as a progressive lens,
- at least one handling appliance (9), arranged movably between the conveyor device (8) and the two processing machines (1, 2), for the removal of lens blanks (6) from the conveyor device (8), for the insertion of a lens blank (6) into the apparatus (3, 4), for removal from the apparatus (3, 4), for insertion into one processing machine (1, 2) each, for removing one finished spectacle lens (7) each from one processing machine (1, 2) each, and for bringing it back to the conveyor device (8).

4. Installation according to Claim 3, in which the apparatuses (3, 4) are in data connection with the handling appliance (9) and the data of the lens blanks (6) recorded by the apparatuses (3, 4) are used in the positionally and angularly accurate, CNC-controlled insertion of the lens blanks (6) into the processing machines (1, 2).

5. Installation according to Claim 4, in which the at least one handling appliance (9) is arranged to be movable on a guide (10) engaging over the processing machine (1, 2) in the manner of a portal.

6. Installation according to Claim 4 or 5, in which one handling appliance (9) each for one processing machine (1, 2) each is provided to be movable between the conveyor device (8) and the respective processing machine (1, 2).

7. Installation according to one of Claims 3 to 6, in which one conveyor belt each for removing lens blanks (6) and for removing pairs of finished lenses (7) is arranged parallel to the two processing machines (1, 2) and the conveyor device (8) between the processing machines (1, 2) likewise consists of a conveyor belt, which extends at right angles to the other two conveyor belts, the lens blanks (6) being removed in pairs from a transport box (13) transported by means of the conveyor belts and replaced therein.

8. Installation according to one of Claims 3 to 7, in which the processing machines (1, 2) have a slowly rotating spectacle lens holding shaft and, parallel to the axis thereof, a polishing disc arrangement, and the axes of the spectacle lens holding shafts extend parallel to one another and to the conveying direction of the conveyor device (8).

9. Installation according to Claim 3 or 7, in which the processing machines (1, 2) have a slowly rotating spectacle lens holding shaft and, parallel to the axis thereof, a polishing disc arrangement, and the axes of the spectacle lens holding shafts extend coaxially with one another and at right angles to the conveying direction of the conveyor device (8).

10. Installation according to one of Claims 4 to 9, in which each processing machine (1, 2) is assigned one apparatus (3, 4) respectively.

11. Installation according to Claim 10, in which the apparatuses (3, 4) are respectively arranged adjacent to the conveyor device (8).

12. Installation according to Claim 10, in which the processing machines (1, 2) are respectively arranged adjacent to the conveyor device (8).

13. Installation according to Claim 11 or 12, in which the processing machines (1, 2) and the apparatuses (3, 4) are arranged adjacently and in alignment.

## Revendications

1. Installation pour l'usinage des bords de verres de lunettes avec
- au moins une machine d'usinage (1) à commande numérique CNC pour usiner la forme d'un verre de lunettes,
- au moins un dispositif (3, 4) pour déterminer les valeurs optiques, le centre optique, la position de l'axe d'un meulage cylindrique ou prismatique, la position d'un segment de près et/ou la position du canal de progression d'un verre de lunettes à foyer progressif (6),
- au moins un appareil de manipulation (9) pour prélever des verres bruts (6) dans un dispositif de transport (8) afin de placer un verre brut (6) dans le dispositif (3, 4), pour l'enlever du dispositif (3, 4) et le placer dans une machine d'usinage respective (1, 2) et pour le ramener au dispositif de transport (8),
dans lequel le au moins un dispositif (3, 4) est en liaison informatique avec au moins une machine d'usinage.
**caractérisée en ce que**,
- au moins un appareil de manipulation (9) est disposé de façon à se déplacer sur un guidage (10) en forme de portique enjambant la machine d'usinage (1, 2), est configuré comme un simple robot de transfert et **en ce que** les données du verre brut relevées par le dispositif (3, 4) sont injectées avec une précision angulaire et de position dans les usinages de bords du verre brut commandés numériquement par CNC par la machine d'usinage (1, 2).

2. Installation pour l'usinage des bords de verres de lunettes avec
- au moins une machine d'usinage (1, 2) à commande numérique CNC pour usiner la forme d'un verre de lunettes,
- au moins un dispositif (3, 4) pour déterminer les valeurs optiques, le centre optique, la position de l'axe d'un meulage cylindrique ou prismatique, la position d'un segment de près et/ou la position du canal de progression d'un verre de lunettes à foyer progressif (6),
- au moins un appareil de manipulation (9)
**caractérisée en ce que**
- au moins un appareil de manipulation (9) est disposé de façon à se déplacer sur un guidage (10) en forme de portique enjambant la machine d'usinage (1, 2), est configuré comme un simple robot de transfert et que le au moins un dispositif (3, 4) est respectivement pourvu d'un dispositif pour placer à la bonne position et sous le bon angle un bloc ou une ventouse sur le verre brut (6) en fonction des données enregistrées du verre brut (6), le bloc ou ventouse présente des fixations qui sont complémentaires de fixations correspondantes sur un arbre de support de verre de lunette de la machine d'usinage (1, 2) et déterminent la position et l'angle du verre brut lors de la mise en place dans la machine d'usinage (1, 2).

3. Installation pour l'usinage des bords de verres de lunettes selon la revendication 1 ou 2, avec
- une machine d'usinage (1) pour usiner la forme d'un verre de lunette gauche,
- une machine d'usinage (2) pour usiner la forme d'un verre de lunette droit,
un dispositif de transport (8) pour les verres bruts et les verres terminés (6, 7), disposé entre les deux machines d'usinage (1, 2) ,
- au moins un dispositif (3, 4) pour déterminer les valeurs optiques, du centre optique, de la position de l'axe d'un meulage cylindrique ou prismatique, de la position d'un segment de préset/ou la position du canal de progression d'un verre de lunettes à foyer progressif (6),
au moins un appareil de manipulation (9) disposé mobile entre le dispositif de transport (8) et les deux machines d'usinage (1, 2) pour prélever des verres bruts (6) dans un dispositif de transport (8), pour placer des verres bruts (6) dans le dispositif (3, 4), pour les enlever du dispositif (3, 4) et les placer dans une machine d'usinage respective (1, 2), pour prélever chaque fois un verre de lunette terminé de la machine d'usinage respective (1, 2), et pour le ramener au dispositif de transport (8).

4. Installation selon la revendication 3, dans laquelle les dispositifs (3, 4) sont en liaison informatique avec l'appareil de manipulation (9) et les données des verres bruts enregistrées par les dispositifs (3, 4) sont communiquées pour la mise en place commandée par CNC avec position et angle précis des verres bruts (6) dans les machines d'usinage (1, 2).

5. Installation selon la revendication 4, dans laquelle le au moins un appareil de manipulation (9) est disposé de façon à se déplacer sur un guidage (10) en forme de portique enjambant la machine d'usinage (1, 2).

6. Installation selon la revendication 4 ou 5, dans laquelle il est prévu un appareil de manipulation (9) pour chacune des machines d'usinage (1, 2) disposé mobile entre le dispositif de transport (8) et la machine d'usinage (1, 2) concernée.

7. Installation selon l'une des revendications 3 à 6, dans laquelle une bande transporteuse pour amener les verres bruts (6) et évacuer les verres terminés (7) est disposée pour chaque machine d'usinage (1, 2) et parallèlement à elles et le dispositif de transport (8) entre les machine d'usinage (1, 2) est également une bande transporteuse qui circule perpendiculairement aux deux autres bandes transporteuses, les verres bruts(6)sont prélevés par paires dans une caisse (13) transportée au milieu de la bande transporteuse et remis dans celle-ci.

8. Installation selon l'une des revendications 3 à 7, dans laquelle les machine d'usinage (1, 2) présentent un arbre support de verre de lunettes tournant lentement ainsi qu'un système de meules tournant sur un axe parallèle à ce dernier et les axes des arbres supports de verre de lunettes s'étendent parallèlement entre eux et dans le sens de transport du dispositif de transport (8).

9. Installation selon la revendication 3 ou 7, dans laquelle les machines d'usinage (1, 2) présentent un arbre support de verre de lunettes tournant lentement ainsi qu'un système de meules tournant sur un axe parallèle à ce dernier et les axes des arbres supports de verre de lunettes s'étendent coaxialement entre eux et perpendiculairement au sens de transport du dispositif de transport (8).

10. Installation selon l'une des revendications 4 à 9, dans laquelle un dispositif (3, 4) est associé à chaque machine d'usinage (1, 2).

11. Installation selon la revendication 10, dans laquelle les dispositifs (3, 4) sont chaque fois disposés au voisinage du dispositif de transport (8).

12. Installation selon la revendication 10, dans laquelle les machines d'usinage (1, 2) sont chaque fois disposées au voisinage du dispositif de transport (8).

13. Installation selon la revendication 11 ou 12, dans laquelle les machines d'usinage (1, 2) et les dispositifs (3, 4) sont disposés à côté les uns des autres et alignés.
